# EUROPEAN PATENT APPLICATION

(11) **EP 4 641 093 A1**
(43) Date of publication of application: **29.10.2025**
(21) Application number: 24172452.5
(22) Date of filing: 25.04.2024
(51) Int. Cl.: F24C 15/00, B64D 11/04, F24C 15/32, F22B 1/08

(54) **SYSTEM AND METHOD FOR PRODUCING STEAM IN AN AIRCRAFT OVEN**

(71) Applicant: B/E Aerospace, Inc., Winston-Salem, NC 27105 (US)
(72) Inventor: PEREZ CAMACHO, Manuel, 3431BH Nieuwegein (NL); CASTILLO, Arnau, 3607 AK Maarsen (NL)
(74) Representative: Dehns

(57) **Abstract**

A system (20) is provided and includes an aircraft oven (200) having an oven cavity (202), a water line (W) connected to a water source to allow a flow of water through the water line (W), a heat exchanger (270) having a first channel to receive the flow of water, a steam line (S) connected to the oven cavity to allow a flow of steam through the steam line (S), wherein the heat exchanger (270) has a second channel to receive the flow of steam such that heat can be transferred from the second channel to the first channel.

## Description

### FIELD

This disclosure relates, generally, to a device for producing steam. The present disclosure also relates to a method for producing steam. In particular, the device and method of the present disclosure may be directed to a device and method for producing steam in an aircraft oven.

### BACKGROUND

Aircraft steam ovens may be used in order to prepare large quantities of food to be served during a flight. Conventional steam aircraft ovens may, however, need to expel steam to their surrounding environments and, owing to the small space that an aircraft oven is contained in, may cause overheating in the galley where cabin crew are undertaking their normal duties. Further, increased heat and moisture from expelled steam from a conventional steam aircraft oven may condensate on colder surfaces in the vicinity of the oven as warm water droplets cause pathogens to grow in the vicinity of the oven that could be hazardous to the crew and passengers.

### SUMMARY

In one aspect, a system is provided and includes an aircraft oven having an oven cavity, a water line connected to a water source to allow a flow of water through the water line, a heat exchanger having a first channel to receive the flow of water, a steam line connected to the oven cavity to allow a flow of steam through the steam line, wherein the heat exchanger has a second channel to receive the flow of steam such that heat can be transferred from the second channel to the first channel.

The system may further include a water inlet module connected to the heat exchanger, the water inlet module may comprise at least one water inlet valve. The first channel of the heat exchanger may be fluidly connected to the water inlet module.

The system may further include a steam outlet module connected to the heat exchanger, the steam outlet module may comprise at least one steam outlet valve. The second channel of the heat exchanger may be fluidly connected to the steam outlet module.

The system may further include an oven control unit. The oven control unit may be configured to open and close the at least one water inlet valve in response to a determination of the ambient temperature inside the oven cavity, and a determination if steam is required. Additionally, or alternatively, the oven control unit may be configured to open and close the at least one steam outlet valve in response to a determination that the pressure and/or humidity in the oven cavity is above or below a predetermined threshold value.

The system may further include at least one outlet provided in the oven cavity configured to provide heated water, steam, or a mixture of both from the water line downstream of the heat exchanger and/or heater into the oven cavity.

The system may further include a heater provided on the water line downstream of the heat exchanger.

The system may further include at least one sensor connected to the oven control unit.

In another aspect, an aircraft may include the system as described above.

In a further aspect, a method is provided and includes providing an aircraft oven having an oven cavity, receiving water from a water source through a water line, passing the water through a first channel of a heat exchanger, receiving steam from the oven cavity through a steam line, and passing the steam through a second channel of the heat exchanger such that heat can be transferred from the second channel to the first channel.

The method may further include determining the ambient temperature of the oven cavity, and a determination if steam is required, and, in response to the determination, opening and closing at least one water inlet valve.

The method may further include determining the pressure and/or humidity within the oven cavity, and, in response to the determination, opening and closing at least one steam outlet valve.

### BRIEF DESCRIPTION OF THE DRAWINGS

Figure 1 shows a prior art system.
Figure 2 shows a steam control system.
Figure 3 shows a method.

### DETAILED DESCRIPTION

The present disclosure generally relates to a device for producing steam and/or recovering heat and decreasing water content from the steam output. The present disclosure also relates to a method for producing steam. In particular, the device and method of the present disclosure may be directed to a device and method for producing steam and/or recovering heat and decreasing water content from the steam output in an aircraft oven.

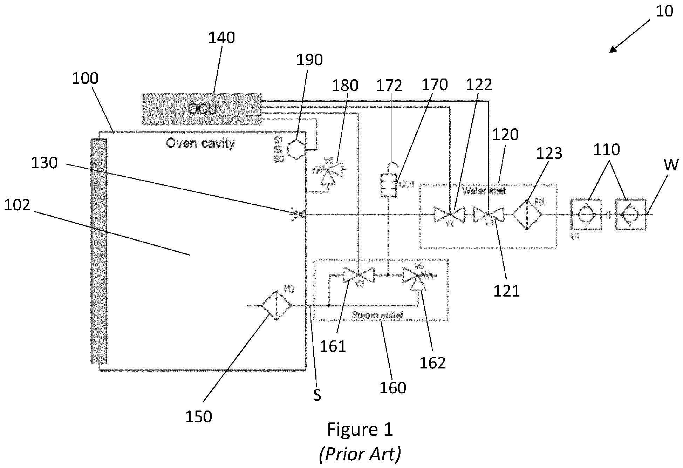

Figure 1 shows a prior art system 10 for producing steam in a steam oven. In particular, Figure 1 shows generally a system 10 for producing steam in an aircraft oven 100. The aircraft oven 100 includes an oven cavity 102. The oven cavity 102 is where consumables may be cooked and/or heated in the aircraft oven 100.

The system 10 includes various components that will be described in conjunction with Figure 1 for producing steam within the oven cavity 102. As shown in Figure 1, the system 10 includes a water line, W, that allows for potable pressurized water to flow from the aircraft through the system 10. A connector valve 110 is provided to allow water to flow through the water line, W, and through the system 10. The connector valve 110 may be a no-return valve (e.g. a valve that only allows one-way flow of a fluid). There is also provided a water inlet module 120 that allows for intake of water from the water line, W. The water inlet module 120 can include a water filter 123, a first water inlet valve 121 and, optionally, a second water inlet valve 122. The water line, W, extends from the connector valve 110, through the water inlet module 120, to an outlet 130. The outlet 130 may be, for example, an injector, a spray nozzle, or the like.

The system 10 also includes an oven control unit 140. In use, when the oven is turned on, the oven control unit 140 can detect, via a sensor 190, the temperature provided in the oven cavity 102. The sensor 190 may be a temperature, pressure and/or humidity sensor. During a steam cooking cycle, and when the oven control unit 140 detects that the ambient air temperature within the oven cavity 102 is above boiling point (i.e. 100 degrees Celsius at a pressure of 1atm - of course, it is to be understood that the boiling point of the liquid may alter due to changes in atmospheric pressure), and steam is required, the oven control unit 140 provides a signal to open the 'normally closed' first water inlet valve 121 and/or the second water inlet valve 122 to allow water to pass from the water inlet module 120 to the outlet 130 provided in the oven cavity 102. In turn, this allows for water to be provided into the oven cavity 102 from the outlet 130. For example, water can be sprayed from an injector into the oven cavity 102. As the water contacts the hot surfaces (e.g. surfaces that are above 100 degrees Celsius) of the oven cavity 102, the water transitions to steam for use in the steam cooking cycle. The oven control unit 140 may also close the 'normally closed' first water inlet valve 121 and/or the second water inlet valve 122 when one or more of the following conditions is met: a time delay, an indication that the amount of water injected has reached a predetermined threshold (e.g. a maximum predetermined threshold), an indication that the humidity within the oven cavity 102 has reached a predetermined threshold (e.g. a maximum predetermined threshold), an indication that no more steam is required (e.g. that the cooking cycle has come to an end), and/or an indication that the pressure within the oven cavity 102 has reached a predetermined threshold (e.g. a maximum predetermined threshold).

The oven control unit 140 may also detect, via the sensor 190, the pressure inside the oven cavity 102. When water is provided into the oven cavity 102, and steam is subsequently generated by the water contacting the surfaces of the oven cavity 102, pressure may increase within the oven cavity 102. When the pressure and/or the humidity increases over a predetermined threshold (e.g. a predetermined maximum threshold), the oven control unit 140 may allow for steam to be expelled from the oven cavity 102 through a steam line, S.

As shown in Figure 1, there may be provided an air filter 150 inside or outside the oven cavity 102. The steam line, S, can allow for a flow of steam that extends from the air filter 150, through an optional steam outlet module 160, to a condenser 170. The steam outlet module 160 may include a first steam outlet valve 161 and/or a second steam outlet valve 162. When the pressure and/or humidity increases over the predetermined threshold (e.g. the predetermined maximum threshold), the oven control unit 140 can open the first steam outlet valve 161 to allow steam to pass through the steam line, S, such that the pressure within the oven cavity 102 is reduced. The second steam outlet valve 162 may be an automatic safety valve that opens if the pressure and/or humidity significantly increases over the predetermined threshold and/or if the rate of change of the pressure and/or humidity is above a predetermined threshold. The first steam outlet valve 161 may be closed, by the oven control unit 140 when pressure and/or humidity falls below the predetermined threshold. The steam expelled from the oven cavity 102 and through the first steam outlet valve 161 and/or the second steam outlet valve 162 passes along the steam line, S, to the condenser 170. Due to the amount of steam passing through the steam line, S, only a small amount of steam is condensed within the condenser 170 and the remaining steam exits a condenser outlet 172 into the galley surroundings. This can cause overheating of galley surfaces in the vicinity of the oven 100 that can cause delamination of the galley surfaces and can directly affect the structural integrity of galley walls. Further, when the vented steam condenses in the galley area, this can potentially create pathogen growth beds in the galley (e.g. on galley surfaces) which would be hazardous to the cabin crew and passengers. The aircraft oven 100 may be included in a galley that uses multiple aircraft ovens that all expel hot, moist air into the galley atmosphere which can be uncomfortable for cabin crew working in that environment.

It is noted that, if the pressure in the oven cavity 102 is indicated as being too high (e.g. levels that are deemed unsafe), a safety valve 180 is included in the system 10 to ensure that the pressure can be reduced quickly.

Although the system 10 in Figure 1 allows for control of pressure in the oven cavity 102, there are significant drawbacks in the expulsion of steam from the oven cavity 102 into the galley atmosphere, as discussed above. Aircraft also utilise 'pressureless' steam ovens that do not include a steam outlet module 160 and these ovens expel steam/air continuously when the pressure in the oven cavity 102 is higher than the ambient pressure (i.e. the pressure in the aircraft cabin). The steam/air is directly provided along steam line, S to the condenser 170.

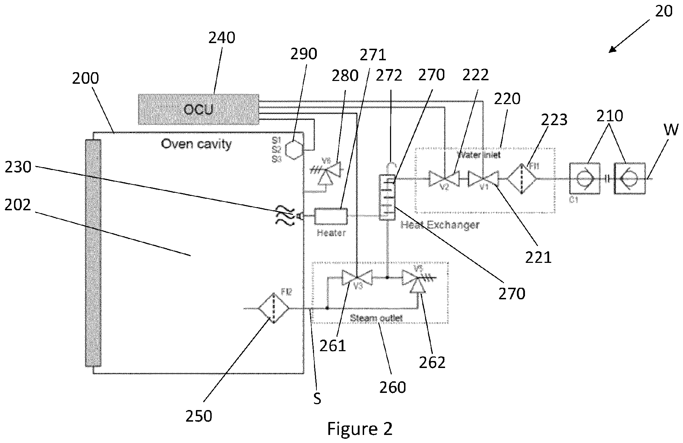

Figure 2 shows a system 20 for producing steam in an oven. In particular, Figure 2 shows generally a system 20 for producing steam in an aircraft oven 200. The aircraft oven 200 includes an oven cavity 202. The oven cavity 202 is where consumables may be cooked and/or heated in the aircraft oven 200.

The system 20 includes various components that will be described in conjunction with Figure 2 for producing steam within the oven cavity 202. As shown in Figure 2, the system 20 includes a water line, W, that allows for potable pressurized water to flow from the aircraft through the system 20. A connector valve 210 is provided to allow water to flow through the water line, W, and through the system 20. The connector valve 210 may be a no-return valve (e.g. a valve that only allows one-way flow of a fluid). There may also be provided a water inlet module 220 that allows for intake of water from the water line, W. The water inlet module 220 can include a water filter 223, a first water inlet valve 221 and, optionally, a second water inlet valve 222.

Downstream from the water inlet module 220, there may be provided a heat exchanger 270 that includes a first channel (not shown) for water to flow therethrough. After the water has passed through the heat exchanger 270, the water may be provided to an optional heater 271. The water then passes to an outlet 230 that is provided in the oven cavity 202. If the heater 271 is not present, the water will pass directly from the heat exchanger 270 to the outlet 230. The heat exchanger 270 may include a second channel (not shown) for steam to flow therethrough, as described in more detail below. Although the heat exchanger 270 is shown to be downstream from the water inlet module 220 in Figure 2, it is envisaged that the heat exchanger 270 may, alternatively, be upstream of the water inlet module 220.

The system 20 may also include an oven control unit 240. In use, when the oven 200 is turned on, and a steam cooking cycle is selected, the oven control unit 240 can detect, via a sensor 290, the temperature provided in the oven cavity 202. The sensor 290 may be a temperature, pressure and/or humidity sensor. During a steam cooking cycle, and when the oven control unit 240 detects that the ambient air temperature within the oven cavity 202 is above a predetermined temperature, and steam is required, the oven control unit 240 provides a signal to open the 'normally closed' first water inlet valve 221 and/or the second water inlet valve 222 to allow water to pass from the water inlet module 220 to the heat exchanger 270. The heat exchanger 270 allows for the cold water (e.g. water of between 10-15 degrees Celsius) to be heated to create a steam and water mixture (e.g. a steam and water mixture having a temperature of around 80 degrees Celsius or higher), as described in more detail below. After the water has passed through the heat exchanger 270, the steam and water mixture may be passed to the outlet 230 provided in the oven cavity 202. The steam and water mixture may then be expelled from the outlet 230 on to surfaces in the oven cavity 202 so that the remaining water can transition to steam by contact with the hot surfaces (e.g. surfaces having a temperature of 100 degrees Celsius or higher) in the oven cavity 202. Alternatively, the steam and water mixture may pass through the optional heater 271 to be further heated and converted into steam and then expelled from the outlet 230 inside the oven cavity 202. The oven control unit 240 may also close the 'normally closed' first water inlet valve 221 and/or the second water inlet valve 222 when one or more of the following conditions is met: a time delay, an indication that the amount of water injected has reached a predetermined threshold (e.g. a maximum predetermined threshold), an indication that the humidity within the oven cavity 202 has reached a predetermined threshold (e.g. a maximum predetermined threshold), an indication that no more steam is required (e.g. that the cooking cycle has come to an end), and/or an indication that the pressure within the oven cavity 202 has reached a predetermined threshold (e.g. a maximum predetermined threshold).

The oven control unit 240 may also detect, via the sensor 290, the pressure inside the oven cavity 202. When the steam and water mixture is provided into the oven cavity 102, and steam is subsequently generated by the remaining water contacting the surfaces of the oven cavity 202, pressure may increase within the oven cavity 202. When the pressure and/or humidity increases over a predetermined threshold (e.g. a predetermined maximum threshold), the oven control unit 240 may allow for steam to be expelled from the oven cavity 202 through a steam line, S.

As shown in Figure 2, there may be provided an air filter 250 inside the oven cavity 202. It is appreciated that the air filter 250 may alternatively be provided on the outside of the oven cavity 202. The steam line, S, can allow for a flow of steam that extends from the air filter 250, through a steam outlet module 260, to the heat exchanger 270. For example, the steam can be provided to the second channel (not shown) of the heat exchanger 270. The steam outlet module 260 may include a first steam outlet valve 261 and/or a second steam outlet valve 262. When the pressure and/or humidity increases over the predetermined threshold, the oven control unit 240 may open the first steam outlet valve 261 to allow steam to pass through the steam line, S, such that the pressure within the oven cavity 202 is reduced. The oven control unit 240 may close the first steam outlet valve 261 when the pressure and/or humidity decreases below the predetermined threshold (e.g. a predetermined minimum threshold). The steam expelled from the oven cavity 202 and through the first steam outlet valve 261 and/or the second steam outlet valve 262 passes along the steam line, S, to the heat exchanger 270. The second steam outlet valve 262 may be an automatic safety valve that opens if the pressure and/or humidity significantly increases over the predetermined threshold and/or if the rate of change of the pressure and/or humidity is above a predetermined threshold. The first steam outlet valve 261 may be closed, by the oven control unit 240 when pressure and/or humidity falls below the predetermined threshold.

As cold water (e.g. water having a temperature of between 10-15 degrees Celsius) is being passed through the first channel (not shown) of the heat exchanger 270 and hot steam (e.g. steam having a temperature equal to or greater than 100 degrees Celsius) is being passed through the second channel (not shown) of the heat exchanger 270, heat may be transferred from the second channel to the first channel to heat the water as it passes through the heat exchanger 270. It is to be understood that the first channel and the second channel of the heat exchanger 270 are in thermal communication such that thermal properties may be exchanged as the water and steam pass through the channels. The steam that has passed through the heat exchanger 270 may be expelled from a heat exchanger outlet 272 of the heat exchanger 270 and into the galley environment. As heat from the steam is being passed to the water due to the interaction in the heat exchanger 270, this significantly reduces (e.g. greater than 40% reduction compared to the system 10 shown in Figure 1) the temperature of the steam as it is expelled from the heat exchanger outlet 272. Due to the temperature reduction, water content of the steam will condense in the heat exchanger 270 and flow back (e.g. due to gravity) to the oven (e.g. through the S line path) reducing the water content and the temperature of the air expelled from the heat exchanger (270). This means that there is less humidity in the steam being expelled from the heat exchanger outlet 272, as well as a decrease in temperature, which avoids or reduces condensation on the aircraft galley surfaces. Therefore, the risk of delamination is significantly reduced and the risk of pathogen beds growing is also reduced.

It is noted that, if the pressure in the oven cavity 202 is indicated as being too high (e.g. levels that are deemed unsafe), a safety valve 280 is included in the system 20 to ensure that the pressure can be reduced quickly.

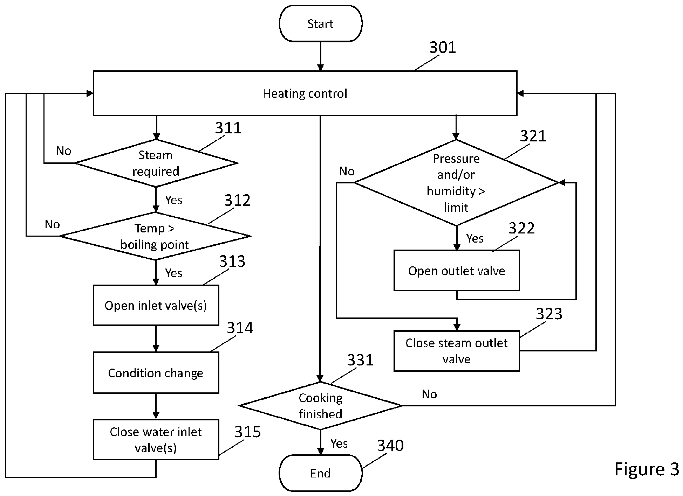

Figure 3 shows a method for controlling steam in a steam aircraft oven. At 'Start', the system controls the activation of the heating (or heating elements) as required by the cooking program and current conditions of the oven in step 301. At step 311, it is determined if steam is required. If it is determined that steam if required, step 312 determines if the ambient temperature of the inner cavity is equal to or greater than the boiling point of the liquid to be input into the oven cavity. If the temperature is greater than or equal to the boiling point of the liquid, at least one water inlet valve is opened at step 313. The system monitors the conditions within the oven cavity and, if it is determined that there is a change in the condition, the system closes the water inlet valve 315 in response to the change in condition. The system also determines if the pressure and/or humidity is greater than a predetermined threshold value at step 321. If it is determined that the pressure and/or humidity is above the predetermined threshold, then at least one steam outlet valve is opened at step 322. If it is determined that the pressure and/or humidity is less than the predetermined threshold value, the steam outlet valve is closed at step 323. The system also determines if cooking has been completed at step 331. If it is determined that the cooking process has finished, the process is ended at step 340.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A system (20), the system comprising:
an aircraft oven (200) having an oven cavity (202);
a water line (W) connected to a water source to allow a flow of water through the water line (W);
a heat exchanger (270) having a first channel to receive the flow of water;
a steam line (S) connected to the oven cavity to allow a flow of steam through the steam line (S); and
wherein the heat exchanger (270) has a second channel to receive the flow of steam such that heat can be transferred from the second channel to the first channel.

2. The system of claim 1, further comprising:
a water inlet module (220) connected to the heat exchanger (270), the water inlet module comprising at least one water inlet valve (221, 222).

3. The system of claim 3, wherein the first channel of the heat exchanger (270) is fluidly connected to the water inlet module (220).

4. The system of any preceding claim, further comprising:
a steam outlet module (260) connected to the heat exchanger (270), the steam outlet module comprising at least one steam outlet valve (261).

5. The system of claim 4, wherein the second channel of the heat exchanger (270) is fluidly connected to the steam outlet module (260).

6. The system of any preceding claim, further comprising:
an oven control unit (240).

7. The system of claim 6, when dependent on claim 2, wherein the oven control unit (240) is configured to open and close the at least one water inlet valve in response to a determination of the ambient temperature inside the oven cavity (202) and a determination if steam is required.

8. The system of claim 6, when dependent on claim 4, wherein the oven control unit (240) is configured to open and close the at least one steam outlet valve (261) in response to a determination that the pressure and/or humidity in the oven cavity (202) is above or below a predetermined threshold value.

9. The system of any preceding claim, further comprising:
at least one outlet (230) provided in the oven cavity (202) configured to provide heated water, steam, or a mixture of both from the water line into the oven cavity (202).

10. The system of any preceding claim, further comprising:
a heater (271) provided on the water line downstream of the heat exchanger (270).

11. The system of any preceding claim, further comprising:
at least one sensor (290) connected to the oven control unit (240).

12. An aircraft including the system as claimed in any preceding claim.

13. A method, the method comprising:
providing an aircraft oven having an oven cavity;
receiving water from a water source through a water line;
passing the water through a first channel of a heat exchanger;
receiving steam from the oven cavity through a steam line; and
passing the steam through a second channel of the heat exchanger such that heat can be transferred from the second channel to the first channel.

14. The method of claim 13, wherein the method further comprises:
determining the ambient temperature of the oven cavity, and a determination if steam is required; and
in response to the determination, opening and closing at least one water inlet valve.

15. The method of claim 13 or 14 wherein the method further comprises:
determining the pressure and/or humidity within the oven cavity, and, in response to the determination, opening and closing at least one steam outlet valve.
